# EUROPEAN PATENT APPLICATION

(11) **EP 4 851 113 A1**
(43) Date of publication of application: **09.12.2026**
(21) Application number: 26180487.6
(22) Date of filing: 22.05.2026
(51) Int. Cl.: C01G 53/50

(54) **POSITIVE ELECTRODE ACTIVE MATERIALS, PREPARATION METHODS OF POSITIVE ELECTRODE ACTIVE MATERIALS, AND RECHARGEABLE LITHIUM BATTERIES**

(30) Priority: 23.05.2025 KR 20250067660
(71) Applicant: SAMSUNG SDI CO., LTD., Yongin-si, Gyeonggi-do 17084 (KR)
(72) Inventor: KANG, Byungwuk, 17084 Yongin-si (KR); KIM, Jinhwa, 17084 Yongin-si (KR); KANG, Taegeun, 17084 Yongin-si (KR); LEE, Chaewon, 17084 Yongin-si (KR)
(74) Representative: Maiwald GmbH

(57) **Abstract**

A positive electrode active material includes core particles each including a zirconium-containing lithium nickel-based composite oxide and each having an amount of nickel greater than or equal to about 60 mol% based on 100 mol% of a total metal in the zirconium-containing lithium nickel-based composite oxide excluding lithium; and a coating layer disposed on a surface of each of the core particles and including cobalt and phosphorus. The positive electrode active material has a BET specific surface area of about 0.7 m²/g to about 0.9 m²/g, and is in a form of single particles.

## Description

### BACKGROUND

### 1. Field

Positive electrode active materials, preparation methods of positive electrode active materials, and rechargeable lithium batteries are disclosed.

### 2. Description of the Related Art

With the rapid spread of electronic devices using batteries such as mobile phones, notebook computers, and electric vehicles, demand for rechargeable batteries having high energy density and high capacity has rapidly increased. Accordingly, there has been research and development for improving the performance of rechargeable lithium batteries.

A rechargeable lithium battery includes a positive electrode and a negative electrode each including an active material capable of intercalating and deintercalating lithium ions, and the battery includes an electrolyte solution. Electrical energy is produced by oxidation and reduction reactions when lithium ions are intercalated/deintercalated at the positive and negative electrodes.

Various positive electrode active materials have been investigated to provide for rechargeable lithium batteries for various uses. Among these materials, lithium nickel-based oxide, lithium nickel manganese cobalt-based composite oxide, lithium nickel cobalt aluminum-based composite oxide, and lithium cobalt-based oxide are mainly used as positive electrode active materials. In recent years, high nickel-based positive electrode active materials having a nickel content of about 80 mol% or more have been developed due to their capability of providing high energy density. But such materials have various problems such as structural deterioration with charging and discharging, surface side reactions with an electrolyte, deterioration due to particle cracking, and the like. Accordingly, development of positive electrode active materials capable of realizing high energy density and long cycle-life characteristics is needed.

The high nickel-based positive electrode active materials providing high capacity have mainly been in the form of secondary particles made by agglomerating a plurality of primary particles. Recently, however, to provide long cycle-life but reduce gas generation, single particle materials have been considered. But because the single particles are prepared at an increased firing temperature, there are problems of increasing agglomeration of the particles and deteriorating producibility. To prevent the agglomeration of the particles and lower the firing temperature, research into adding an alkaline particle growth accelerator during the single particles synthesis has been proposed, but this has a problem that the grain growth accelerator may remain after the firing and act resistance in the positive electrode, which resultants in deteriorated cycle-life. Thus, a washing process for removing the residual grain growth accelerator or residual salts may be introduced, but the washing process increases the manufacturing cost and/or complicates the manufacturing process.

In other cases, a method of doping an element (e.g., aluminum) that can replace the alkaline particle growth accelerator when mixing the positive electrode active material precursor and the lithium raw material has been used. But in such a method it is difficult for the element to be evenly doped into the positive electrode active material.

### SUMMARY

A positive electrode active material capable of uniform particle growth during preparation and a preparation method of the positive electrode active material are disclosed. By introducing a coating layer, the performance of a rechargeable lithium battery at high temperatures and high voltages is improved, and capacity characteristics, initial charge/discharge efficiency, and high-temperature cycle-life characteristics are enhanced.

In some example embodiments, a positive electrode active material includes a core particles each including a zirconium-containing lithium nickel-based composite oxide and having an amount of nickel greater than or equal to about 60 mol% based on 100 mol% of a total metal in the zirconium-containing lithium nickel-based composite oxide excluding lithium; and a coating layer disposed on a surface of each of the core particles and including cobalt and phosphorus; wherein the positive electrode active material has a BET specific surface area of about 0.7 m²/g to about 0.9 m²/g, and the positive electrode active material is in a form of single particles.

In some example embodiments, a method of preparing a positive electrode active material includes (i) mixing a zirconium raw material and a nickel raw material and performing a co-precipitation reaction to prepare a zirconium-containing nickel-based composite hydroxide; (ii) performing a first heat treatment on the zirconium-containing nickel-based composite hydroxide to prepare a zirconium-containing nickel-based composite oxide; (iii) mixing the zirconium-containing nickel-based composite oxide and a lithium raw material and performing a second heat treatment to prepare a zirconium-containing lithium nickel-based composite oxide in the form of secondary particles that are agglomerations of primary particles; (iv) pulverizing the zirconium-containing lithium nickel-based composite oxide to obtain a preliminary positive electrode active material in a form of single particles; and (v) mixing the preliminary positive electrode active material, a cobalt raw material, and a phosphorus raw material, performing a third heat treatment, and disintegrating the mixture after the heat treatment.

In some example embodiments, a rechargeable lithium battery includes: a current collector; a positive electrode disposed on the current collector and including a positive electrode active material layer including the positive electrode active material; a negative electrode; and an electrolyte.

According to a method of preparing a positive electrode active material according to an embodiment, uniform particle growth is possible and a coating layer may be efficiently introduced onto the surface of the positive electrode active material. A positive electrode active material and a rechargeable lithium battery including the positive electrode active material may exhibit high initial charge/discharge capacity and efficiency and can have long cycle-life characteristics.

### BRIEF DESCRIPTION OF THE DRAWINGS

FIG. 1 is a schematic perspective view of a cylindrical rechargeable lithium battery.
FIG. 2 is a cross-sectional view of a prismatic rechargeable lithium battery.
FIGS. 3 and 4 are schematic exploded perspective views of a pouch-type rechargeable lithium battery.

### DETAILED DESCRIPTION

Hereinafter, specific embodiments will be described in detail so that those of ordinary skill in the art can implement them. However, this disclosure may be embodied in many different forms and is not construed as limited to the example embodiments set forth herein.

The terminology used herein is used to describe embodiments only, and is not intended to limit the present disclosure. A singular expression includes the plural expression unless the context clearly dictates otherwise.

As used herein, "combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

An average particle diameter may be measured by a method well known to those skilled in the art, for example, by a particle size analyzer, or by a transmission electron microscope image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image and calculating the volume of each of said particles using this measured value and assuming a spherical shape of the particles.

Herein, "or" is not to be construed as an exclusive meaning, for example, "A or B" is construed to include A, B, A+B, and the like.

"Metal" includes ordinary metals, transition metals, and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements groups 1 and 2 excluding H (but including Be) are regarded as representing metals.

### Positive Electrode Active Material

### Core Particle

Some example embodiments provide a positive electrode active material including core particles including a zirconium-containing lithium nickel-based composite oxide and having a nickel amount of greater than or equal to about 60 mol% based on 100 mol% of a total metal in the positive electrode active layer excluding lithium, and a coating layer disposed on a surface of each of the core particles and including cobalt and phosphorus, wherein the positive electrode active material may have a BET (Brunauer, Emmett, and Teller) specific surface area of about 0.7 m²/g to about 0.9 m²/g and be in a form of single particles.

Zirconium may act as a grain growth accelerator during the synthesis process. Thus, by uniformly distributing zirconium within a positive electrode active material precursor, it is possible to prepare a positive electrode active material in the form of single particles with uniform grain growth. As such, a rechargeable lithium battery including the positive electrode active material may have excellent charge/discharge efficiency and life characteristics.

The single particles may exist alone without a grain boundary within the particles, each be composed of one particle, and may be a single particle, a monolith structure, a one body structure, or a non-agglomerated particle in which particles are not agglomerated with each other but exist as an independent phase in terms of morphology. The particles may be expressed as a single particle (one body particle, single grain), for example, as a single crystal. The single particles may exist alone, or single particles may be agglomerated together. For example, 2 to 10 single particles may be agglomerated and in contact with each other. For example, the single particle refers to a term used to distinguish it from a secondary particle formed by aggregation of tens to hundreds of primary particles, and means a single particle composed of one primary particle. A pseudo-single particle refers to a composite particle composed of 10 or fewer primary particles. The secondary particle refers to an aggregate, i.e., a secondary structure, in which tens to hundreds of primary particles are aggregated by physical or chemical bonding between the primary particles, even without an intentional aggregation or assembly process of the primary particles. Further, the primary particle refers to the smallest particle unit that can be distinguished as a single particle when observing a cross-section of the positive electrode active material using a scanning electron microscope (SEM), and may be composed of a single grain (crystallite) or a plurality of grains. In addition, a grain (or crystallite) refers to a region within a primary particle in which atoms are arranged in a lattice structure with a consistent orientation.

Span value may be an indicator showing a width of a particle size distribution of a positive electrode active material and, accordingly, span value may be used to evaluate uniformity of positive electrode active material particles. The span value may be represented by Equation 1. [Equation 1] $Span = \left({D}_{90}-{D}_{10}\right) / {D}_{50}$

In Equation 1, D₁₀ is a particle diameter of a particle with a cumulative volume of 10 volume% in the particle size distribution, D₅₀ is a particle diameter of a particle with a cumulative volume of 50 volume% in the particle size distribution, and D₉₀ is the particle diameter of a particle with a cumulative volume of 90 volume% in the particle size distribution.

The span value may be measured by using a particle size analyzer for a positive electrode active material. Specifically, a device such as a laser diffraction particle size analyzer, a dynamic light scattering analyzer, and the like may be used to measure particle sizes corresponding to about 10%, about 50%, and about 90% cumulative volumes in the particle size distribution, which are used to calculate the span value.

In some embodiments of the present disclosure, the span value of the positive electrode active material may be about 1.1 to about 1.3, for example, about 1.12 to about 1.28, about 1.14 to about 1.26, about 1.16 to about 1.24, or about 1.18 to about 1.22.

The BET specific surface area value of the positive electrode active material may be about 0.7 m²/g to about 0.9 m²/g, for example, about 0.8 m²/g to about 0.9 m²/g, or about 0.85 m²/g to about 0.9 m²/g. The BET specific surface area may be measured using a BET specific surface area measuring device that utilizes a nitrogen gas adsorption method, and specifically measured using the method of Evaluation Example 2 described below. When the span value and the BET specific surface area of the positive electrode active material are in these ranges, the particle size distribution is uniform, thereby providing a positive electrode active material with excellent particle uniformity. As such, a rechargeable lithium battery including the positive electrode active material may have excellent charge/discharge characteristics and cycle-life characteristics.

In some examples, the positive electrode active material may be in the form of single particles having an average particle diameter (D₅₀) of about 1 µm to about 4 µm, for example, about 1 µm to about 3 µm, about 2 µm to about 4 µm, or about 2 µm to about 3 µm. In other examples, the positive electrode active material may be in the form of single particles having a particle diameter (D₁₀) of about 0.1 µm to about 3 µm, for example, about 0.5 µm to about 2.5 µm, or about 1 µm to about 2 µm. In further examples, the positive electrode active material may be in the form of single particles having a particle diameter (D₉₀) of about 3 µm to about 6 µm, for example, about 4 µm to about 6 µm, or about 4 µm to about 5.5 µm. In other examples, the positive electrode active material may be in the form of single particles having a particle diameter (D₂₅) of about 0.5 µm to about 4 µm, for example, about 1 µm to about 3 µm, or about 1.5 µm to about 2.5 µm. And in further examples, the positive electrode active material may be in the form of single particles having a particle diameter (D₇₅) of about 2.5 µm to about 5 µm, for example, about 3 µm to about 5 µm, or about 3 µm to about 4.5 µm. In addition to the span value, when the positive electrode active material in the form of single particles having particle diameters in these ranges, the particle size distribution is more uniform, thereby providing a positive electrode active material with excellent particle uniformity. Further, the single particles are structurally stable, can increase the energy density of the positive electrode, and can improve the long cycle-life characteristics of rechargeable lithium batteries. Here, the average particle diameter (D₅₀) and particle diameters D₁₀, D₉₀, D₂₅, and D₇₅ may be measured using a particle size analyzer that utilizes, for example, laser diffraction.

The zirconium-containing lithium nickel-based composite oxide may be a high nickel-based oxide having a nickel amount of greater than or equal to about 60 mol% based on 100 mol% of a total metal in the zirconium-containing lithium nickel-based composite oxide excluding lithium. The nickel amount may be, for example, greater than or equal to about 65 mol%, greater than or equal to about 70 mol%, greater than or equal to about 75 mol%, greater than or equal to about 80 mol%, greater than or equal to about 85 mol%, greater than or equal to about 90 mol%, greater than or equal to about 91 mol%, or greater than or equal to about 94 mol% and less than or equal to about 99 mol% or less than or equal to about 98 mol% based on 100 mol% of a total metal in the zirconium-containing lithium nickel-based composite oxide excluding lithium. When the nickel content in a zirconium-containing lithium nickel-based composite oxide is in these ranges, high capacity and high energy density may be achieved.

The lithium nickel-based composite oxide may include a specific amount of zirconium as a dopant in addition to nickel. For example, the zirconium may be included in an amount of about 0.1 wt% to about 0.4 wt%, for example, about 0.1 wt% to about 0.3 wt%, about 0.1 wt% to about 0.2 wt%, about 0.15 wt% to about 0.2 wt%, or about 0.16 wt% to about 0.18 wt% based on 100 wt% of the zirconium-containing lithium nickel-based composite oxide. If the zirconium is included in an amount of less than about 0.1 wt% based on 100 wt% of the zirconium-containing lithium nickel-based composite oxide, the positive electrode active material particles may not be uniform. If the zirconium is included in an amount exceeding about 0.4 wt%, excessive addition of zirconium may cause agglomeration within the positive electrode active material.

The zirconium-containing lithium nickel-based composite oxide may be represented by Chemical Formula 1.

[Chemical Formula 1] Liₐ₁Niₓ₁M¹_{y1}Zr_{z1}O_{2-b1}X_{b1}

In Chemical Formula 1, 0.9≤a1≤1.2, 0.6≤x1≤0.991, 0≤y1≤0.5, 0.001≤z1≤0.003, 0.9≤x1+y1+z1≤1.1, and 0≤b1≤0.1, M¹ is one or more elements of Al, B, Ba, Ca, Ce, Co, Cr, Cu, Fe, Mg, Mn, Mo, Nb, Si, Sn, Sr, Ti, V, W, Y, and Zn, and X is one or more elements of F, P, and S. In other embodiments of Chemical Formula 1, 0.9≤a1≤1.1, 0.9≤a1≤1.05, or 0.9≤a1≤1, 0.7≤x1≤0.991, and 0≤y1≤0.291, 0.8≤x1≤0.991, and 0≤y1≤0.191, or 0.9≤**x1**≤0.991, and 0≤y1≤0.091. The z1 representing the Zr content may be, for example, 0.001≤z1≤0.002. The concentration of zirconium within the single particles may be uniform. For example, each of the single particles may not have a zirconium concentration gradient from the center to the surface, or the zirconium concentration may not be higher or lower in a portion closer to the surface than in the center of the single particle, and zirconium may be evenly distributed within the single particle. This structure may be obtained by synthesizing a positive electrode active material in a form of single particles using a precursor including zirconium without additionally doping zirconium during the synthesis process of single particles. For example, this structure may be obtained by using a zirconium-containing nickel-based oxide as a precursor, mixing the precursor with a lithium raw material, and performing a heat treatment to synthesize a lithium nickel-zirconium-based composite oxide. Thus, a zirconium content within the single particle is the same or similar regardless of location within the single particle. For example, when the zirconium content is measured at an arbitrary location in the cross-section of the single particle, the zirconium content can be expressed as being the same, similar, or uniform regardless of whether the location is close to the center of the single particle or close to the surface of the single particle.

In the case of doping zirconium in the synthesis process of single particles, such as in the case of preparing a lithium nickel-based composite oxide doped with zirconium through a process of mixing a nickel-containing precursor, a zirconium raw material, and a lithium raw material and firing the materials, zirconium may not be uniformly distributed and instead coagulate inside the single particles. But in the positive electrode active material according to embodiments of the present disclosure, zirconium is uniformly distributed within the single particles and no coagulation phenomenon occurs. Accordingly, the initial charge/discharge capacity, initial charge/discharge efficiency, and cycle-life characteristics of the positive electrode active material may be improved. The even distribution of zirconium within single particles can be determined by analyzing the distribution of the zirconium element, for example, using scanning electron microscopy-energy dispersive spectroscopy (SEM-EDS) on a cross-section of a single particle. That is, the positive electrode active material according to embodiments of the present disclosure may have zirconium uniformly distributed in the SEM-EDS analysis of the cross-section of a single particle.

### Coating Layer

According to some example embodiments, a positive electrode active material includes coating layers disposed on the surfaces of the core particles and including cobalt and phosphorus.

In the positive electrode active material, the cobalt content in the coating layer based on 100 mol% of the total metal of the positive electrode active material excluding lithium may be about 0.1 mol% to about 5.0 mol%, for example, about 0.5 mol% to about 4.5 mol%, about 1.0 mol% to about 4.0 mol%, about 1.5 mol% to about 3.5 mol%, or about 2.0 mol% to about 3.0 mol%. When the cobalt amount is in these ranges, the positive electrode active material forms a good coating layer without decreasing capacity or increasing resistance, effectively suppressing side reactions with the electrolyte, and effectively reducing gas generation under high voltage or high temperature conditions.

In the positive electrode active material, the phosphorus content in the coating layer based on 100 mol% of the total metal of the positive electrode active material excluding lithium may be about 0.1 mol% to about 1.0 mol%, for example, about 0.2 mol% to about 0.9 mol%, about 0.3 mol% to about 0.8 mol%, about 0.4 mol% to about 0.7 mol%, or about 0.4 mol% to about 0.6 mol%. When the phosphorus amount is in these ranges, the positive electrode active material has a good coating layer without decreasing capacity or increasing resistance, effectively suppresses side reactions with the electrolyte, and effectively reduces gas generation under high voltage or high temperature conditions.

The coating layer may be present in the form of islands on the surfaces of the core particles, or the coating layer may be in the form of a film that continuously wraps the surfaces of the core particles, or the coating layer may be in the form of shells that wrap the entire surfaces of the core particles. The coating layer may be formed evenly with a thin and uniform thickness. With such a configuration, the positive electrode active material has improved structural stability without increasing resistance or decreasing capacity, may effectively suppress side reactions with the electrolyte, may reduce gas generation under high voltage and high temperature conditions, and may have long cycle-life characteristics.

A thickness of the coating layer on each of the particles may be about 30 nm to about 2000 nm, for example about 30 nm to about 1000 nm, about 30 nm to about 500 nm, about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. When the coating layer is in these thickness ranges, the structural stability of the positive electrode active material may be improved and side reactions with the electrolyte may be effectively suppressed without increasing resistance or decreasing capacity due to the coating. The thickness of the coating layer may be measured, for example, through TOF-SIMS (Time-of-Flight Secondary Ion Mass Spectrometry), XPS (X-ray Photoelectron Spectroscopy), or EDS (Energy-Dispersive X-ray Spectroscopy) analysis, and the thickness range of the coating layer may be measured through a TEM-EDS (Transmission Electron Microscopy with Energy Dispersive Spectroscopy) line profile.

Based on the total 100 wt% of the zirconium-containing lithium nickel-based composite oxide, an amount of the residual lithium remaining on the surface of the core particles including the zirconium-containing lithium nickel-based composite oxide may be less than or equal to about 1500 ppm, for example, about 1000 ppm to about 1500 ppm. For example, based on the total 100 wt% of the zirconium-containing lithium nickel-based composite oxide, an amount of LiOH remaining on the surfaces of the core particles including the zirconium-containing lithium nickel-based composite oxide may be less than or equal to about 0.29 wt%, for example, about 0.2 wt% to about 0.29 wt%, and based on the total 100 wt% of the zirconium-containing lithium nickel-based composite oxide, an amount of Li₂CO₃ remaining on the surfaces of the core particles of the zirconium-containing lithium nickel-based composite oxide may be less than or equal to about 0.4 wt%, for example, about 0.1 wt% to about 0.4 wt%, or about 0.3 wt% to about 0.4 wt%. The amounts of residual lithium, LiOH, and Li₂CO₃ may be measured through the HCl titration method.

### Method of Preparing Positive Electrode Active Material

A method of preparing a positive electrode active material includes: (i) mixing a zirconium raw material and a nickel raw material and performing a co-precipitation reaction to prepare a zirconium-containing nickel-based composite hydroxide; (ii) performing a first heat treatment on the zirconium-containing nickel-based composite hydroxide to prepare a zirconium-containing nickel-based composite oxide; (iii) mixing the zirconium-containing nickel-based composite oxide and a lithium raw material and performing a second heat treatment to prepare a zirconium-containing lithium nickel-based composite oxide in the form of secondary particles in which a plurality of primary particles are agglomerated; (iv) pulverizing the zirconium-containing lithium nickel-based composite oxide in the form of secondary particles to obtain a preliminary positive electrode active material in a form of single particles; and (v) mixing the preliminary positive electrode active material, a cobalt raw material, and a phosphorus raw material, and performing a third heat treatment and disintegration.

To dope zirconium into a positive electrode active material including a lithium nickel-based composite oxide, previously a method was used in which a nickel-based composite hydroxide or nickel-based composite oxide produced after a co-precipitation reaction is mixed with a lithium raw material and heat-treated, and then zirconium raw material is added together with the heat treatment. This conventional method may be understood as a method of post-doping zirconium, wherein the zirconium is not evenly distributed, thereby causing a problem of providing a single-particle positive electrode active material with uneven particle growth.

The method according to some example embodiments is to add the zirconium raw material to the nickel raw material to perform the co-precipitation reaction, which may be understood as a zirconium predoping method.

Here, the zirconium raw material may serve as a dopant and also as a particle growth accelerator (flux). When the zirconium raw materials are added, particle growth is promoted, making it possible to effectively synthesize single particles at a lower temperature compared to existing single particle synthesis methods. As a result, agglomeration of particles is suppressed and productivity is improved. The zirconium raw materials are used as dopants for the positive electrode active material and do not remain on the surface of the positive electrode active material particles. Thus, the cycle-life characteristics of a battery including the positive electrode active material can be improved.

In some embodiments where the positive electrode active material single particles are prepared by predoping zirconium, single crystals can be prepared with relatively uniform particle growth due to even distribution of the zirconium. A rechargeable lithium battery including the positive electrode active material single particles with uniform particle growth may exhibit increased charge/discharge capacity and efficiency and have excellent cycle-life characteristics.

The preparation method may be understood as a method of mixing a zirconium-containing nickel-based composite oxide in the form of an oxide (hereinafter, referred to as an 'oxide precursor') with the lithium raw material and firing the mixture. Conventionally, a method of mixing the lithium raw material with a nickel-based composite hydroxide in the form of a hydroxide (hereinafter, referred to as a 'hydroxide precursor') and firing the mixture is used. The oxide precursor has a smaller volume than the hydroxide precursor and thus may be more contained in a reactor (a crucible, etc.) than the hydroxide precursor in a process of preparing the positive electrode active material. The result is a higher reaction yield, which may be significantly advantageous in terms of production volume and economic efficiency. Further, the oxide precursor has a similar reaction temperature range to that of the lithium raw material and thus an advantage of achieving more uniform particle growth of a positive electrode active material than the hydroxide precursor.

Hereinafter, a method of preparing a positive electrode active material is described.

A method of preparing a positive electrode active material according to some example embodiments includes mixing a zirconium raw material and a nickel raw material and performing a co-precipitation reaction to prepare a zirconium-containing nickel-based composite hydroxide.

The zirconium raw material may include, for example, zirconium oxide, zirconium hydroxide, zirconium oxyhydroxide, zirconium sulfate, zirconium sulfide, zirconium acetate, zirconium nitrate, zirconium halide, or a combination thereof. Specific examples of the zirconium raw material include ZrO₂, ZrO(NO₃)₂·xH₂O (2≤x≤6), Zr(SO₄)₂·4H₂O, or a combination thereof. The nickel raw material may include nickel hydroxide, oxide, nitrate, sulfur oxide, carbonate, or a combination thereof.

In the co-precipitation reaction, a metal (M¹) raw material may be mixed together with the zirconium raw material and the nickel raw material. Here, M¹ may be is one or more of Al, B, Ba, Ca, Ce, Co, Cr, Cu, Fe, Mg, Mn, Mo, Nb, Si, Sn, Sr, Ti, V, W, Y, and Zn. In some embodiments, the metal (M¹) raw material may include a hydroxide, an oxide, a nitrate, a sulfate, a carbonate, or a combination thereof containing the M¹ element.

A complexing agent and pH controlling agent may be used in the co-precipitation reaction. The complexing agent plays a role in controlling a reaction rate of precipitate formation in the co-precipitation reaction. The complexing agent may include, for example, ammonium hydroxide (NH₄OH), citric acid, or a combination thereof. A concentration of complexing agent may be about 0.1 to about 1.5 M, for example about 0.1 to about 1.4 M, or about 0.5 to about 1.4 M. The pH controlling agent serves to control the pH of the reactant and may include, for example, sodium hydroxide (NaOH), sodium carbonate (Na₂CO₃), sodium oxalate (Na₂C₂O₄), or a combination thereof.

The co-precipitation reaction may include a first step reacting at a pH range of about 11 to about 12 and a second step reacting at a pH lower than the first step. The pH of the first step may be, for example, about 11.5 to about 12, about 11.6 to about 11.9, or about 11.7 to about 11.8, and may be considered a kind of pore shaping step. The second step is at a pH lower than that of the first step and may be a type of particle growth step. The pH of the second step may be, for example, about 10 to about 11.9, about 10.5 to about 11.7, about 11 to about 11.7, about 11.2 to about 11.6, or about 11.3 to about 11.6. A difference between the pH of the first step and the pH of the second step may be, for example, about 0.1 to about 1.5, for example about 0.1 to about 1.0, about 0.1 to about 0.8, about 0.1 to about 0.6, about 0.1 to about 0.5, about 0.1 to about 0.3, or about 0.1 to about 0.2. The first step may proceed about 6 to about 12 hours, or about 8 to about 10 hours. The second step may proceed about 10 to about 30 hours, about 15 to about 25 hours, or about 18 to about 24 hours.

The preparation method according to some embodiments includes subjecting the zirconium-containing nickel-based composite hydroxide to first heat treatment to prepare a zirconium-containing nickel-based composite oxide. The zirconium-containing nickel-based composite oxide may be a precursor of a positive electrode active material and may be referred to as a Zr predoped oxide precursor. The zirconium-containing nickel-based composite oxide may be synthesized by first heat-treating the zirconium-containing nickel-based composite hydroxide prepared by the co-precipitation reaction.

The first heat treatment may be performed at a temperature of less than or equal to about 500 °C, for example, about 250 °C to about 500 °C, about 300 °C to about 500 °C, about 350 °C to about 500 °C, or about 400 °C to about 500 °C, for example, about 400°C, about 450 °C, or about 500 °C. Further, the first heat treatment may be performed in an oxygen atmosphere or an air atmosphere for about 1 to about 10 hours, for example, about 2 to about 9 hours, or about 4 to about 8 hours.

The zirconium-containing nickel-based composite oxide prepared above may be represented by Chemical Formula 11.

[Chemical Formula 11] Niₓ₁₁M¹_{y11}Zr_{z11}O₂

In Chemical Formula 11, 0.6≤x11≤1, 0≤y11<0.4, 0<z11≤0.3 and 0.9≤x11+y11+z11≤1.1, and M¹ is one or more of Al, B, Ba, Ca, Ce, Co, Cr, Cu, Fe, Mg, Mn, Mo, Nb, Si, Sn, Sr, Ti, V, W, Y, and Zn. In further embodiments with Chemical Formula 11, 0.7≤x11≤1, 0≤y11≤0.3, 0≤z11≤0.3, or 0.8≤x11≤1, 0≤y11≤0.2, 0.1≤z11≤0.3, or 0.9≤x11<1, 0<y11≤0.1, 0.2≤z11≤0.3.

Based on 100 wt% of the zirconium-containing nickel-based composite oxide, the zirconium may be included in an amount of about 0.1 wt% to about 0.5 wt%, for example, about 0.1 wt% to about 0.4 wt%, about 0.1 wt% to about 0.3 wt%, about 0.2 wt% to about 0.3 wt%, or about 0.2 wt% to about 0.25 wt%. If the zirconium is included in an amount of less than about 0.1 wt% based on 100 wt% of the zirconium-containing nickel-based composite oxide, it may be difficult to sufficiently promote grain growth of the positive electrode active material single particles. If the zirconium is included in an amount exceeding about 0.5 wt%, excessive addition of zirconium may cause agglomeration within the positive electrode active material.

The span value of the zirconium-containing nickel-based composite oxide may be about 0.2 to about 0.6, for example from about 0.3 to about 0.6. If the span value of the zirconium-containing nickel-based composite oxide as a precursor is in these ranges, the particle size distribution is uniform, and thus the uniformity of the positive electrode active material prepared with the nickel-based composite oxide is also improved.

The zirconium-containing nickel-based composite oxide may be in the form of secondary particles. The average particle diameter (D₅₀) of the zirconium-containing nickel-based composite oxide may be about 9 µm to about 16 µm, for example, about 10 µm to about 15 µm, about 11 µm to about 14 µm, or about 12 µm to about 14 µm.

The tap density (TD) of the zirconium-containing nickel-based composite oxide may be about 2 g/cm³ to about 3 g/cm³, for example, about 2 g/cm³ to about 2.5 g/cm³, or about 2.05 g/cm³ to about 2.2 g/cm³. When these ranges are satisfied, the reaction yield is high and uniform particle growth of the active material may be realized.

The BET surface area value of the zirconium-containing nickel-based composite oxide may be about 50 m²/g to about 90 m²/g, for example, about 60 m²/g to about 80 m²/g, or about 70 m²/g to about 80 m²/g. When these ranges are satisfied, the specific surface area of the precursor is high, and thus the reaction yield may be increased and uniform particle growth of the active material may be realized.

The preparation method according to some embodiments includes (iii) mixing the zirconium-containing nickel-based composite oxide and a lithium raw material and performing a second heat treatment to prepare a zirconium-containing lithium nickel-based composite oxide in the form of secondary particles that are agglomerations of primary particles.

The lithium raw material may include, for example, lithium hydroxide, lithium carbonate, lithium sulfate, lithium nitrate, or a combination thereof. The lithium raw material may be, for example, anhydrous lithium hydroxide.

The method of preparing a positive electrode active material according to some embodiments promotes uniform grain growth of the positive electrode active material by using a doped zirconium-containing nickel-based composite oxide. Such a method has the advantage of being able to effectively synthesize single particles even when heat-treated at a lower temperature than conventional single particle synthesis methods.

The second heat treatment temperature may be performed at less than or equal to about 900 °C, less than or equal to about 890 °C, less than or equal to about 850 °C, or less than or equal to about 810 °C, for example, about 600 °C to about 900 °C, about 600 °C to about 850 °C, or about 600 °C to about 800 °C. The second heat treatment may be performed under oxidizing gas atmosphere, for example, for about 4 hours to about 16 hours, about 5 hours to about 16 hours, or about 6 hours to about 16 hours.

In the method of preparing a positive electrode active material according to some embodiments, an alkaline grain growth accelerator or a flux may not be added during the mixing and second heat treatment of the zirconium-containing nickel-based composite oxide and the lithium raw material. Accordingly, an increase in resistance caused by a residue after the second heat treatment may be prevented, which improves cycle-life characteristics of a rechargeable lithium battery including the positive electrode active material. Also, because there is no need to add a process of removing the residue, the productivity and processability may be improved. The alkaline grain growth accelerator refers to an additive that provides or contains an alkali metal component during a heat-treatment process, thereby promoting surface diffusion and mass transport of particles, which in turn facilitates grain growth, lowers the sintering temperature, or controls the state of particle aggregation. Examples of the alkaline grain growth accelerator include Na₂CO₃, NaOH, K₂CO₃, KOH, and Li₂CO₃.

In addition, as described above, in the method of preparing a positive electrode active material, the zirconium raw material may be added in advance during the synthesis of the zirconium-containing nickel-based composite oxide before the second heat treatment of the zirconium-containing nickel-based composite oxide with the lithium raw material. Accordingly, the zirconium may be uniformly doped in the zirconium-including nickel-based composite oxide and thereby promote particle growth of positive electrode active material single particles, which thereby provides uniformly grown positive electrode active material particles.

As a result of the second heat treatment, secondary particles including the zirconium-containing lithium nickel-based composite oxide may be obtained. For example, the zirconium-containing lithium nickel-based composite oxide obtained after the second heat treatment may include the secondary particles that are agglomerations of primary particles. Here, the primary particles forming the secondary particles may sufficiently grow due to the addition of the zirconium raw material and become single particles.

The average particle diameter (D₅₀) of the obtained secondary particles may be about 10 µm to about 20 µm, for example about 10 µm to about 18 µm, about 12 µm to about 16 µm, or about 12 µm to about 14 µm. The average particle diameter (D₅₀) of secondary particles may be measured through SEM (scanning electron microscope) images.

The average particle diameter (D₅₀) of the primary particles constituting the secondary particles may be about 1 µm to about 4 µm, for example, about 1 µm to about 3 µm, about 2 µm to about 4 µm, or about 2 µm to about 3 µm. The average particle diameter (D₅₀) of the primary particles may be measured through SEM images of the surfaces of the secondary particles.

The method of preparing a positive electrode active material according to some embodiments includes pulverizing the lithium nickel-based composite oxide in the form of secondary particles to obtain a preliminary positive electrode active material in a form of single particles.

The pulverization of the secondary particles means breaking the prepared secondary particles such that the primary particles making up the secondary particles are separated from each other into single particles. As a result of the pulverization, the aforementioned preliminary positive electrode active material in the form of single particles with an average particle diameter (D₅₀) of about 1 µm to about 4 µm may be obtained.

The pulverization may be carried out using a jet mill equipment. When the pulverization with a jet mill is performed, a bed weight may be about 250 kg to about 300 kg, a rotation speed of a sieving wheel may be about 1500 rpm to about 2000 rpm, a rotation speed of a blower may be about 2500 rpm to about 3500 rpm, a pulse pressure may be about 0.25 bar to about 0.75 bar, a gap pressure may be about 0.3 bar to about 0.5 bar, and G/A may be about 6 bar to 8 bar.

The pulverizing time may vary depending on a rotation speed of the sieving wheel of the jet mill equipment, the rotation speed of the blower, the pressure, and the bed weight. In some examples, 4 kg to 6 kg of sample can be processed per minute based on the jet mill equipment.

The preliminary positive electrode active material in the form of single particles may include a compound represented by Chemical Formula 1, as described above.

The zirconium may be included in an amount of about 0.1 wt% to about 0.4 wt%, for example, about 0.1 wt% to about 0.3 wt%, about 0.1 wt% to about 0.2 wt%, about 0.15 wt% to about 0.2 wt%, or about 0.16 wt% to about 0.18 wt% based on 100 wt% of the preliminary positive electrode active material in the form of single particles. The zirconium content included in the preliminary positive electrode active material may be measured using a SEM (Scanning Electron Microscope)-EDS (Energy-Dispersive X-ray Spectroscopy) analysis technique.

The method of preparing a positive electrode active material according to some embodiments further includes mixing the preliminary positive electrode active material, a cobalt raw material, and a phosphorus raw material, performing a third heat treatment, and then disintegrating the result. Through these steps, it is possible to obtain single particles coated with the desired material. These steps may be referred to a dry coating process.

Here, the cobalt raw material may be a hydroxide, oxide, sulfur oxide, nitrate, or carbonate including cobalt. The phosphorus raw material may be a hydroxide, oxide, sulfur oxide, phosphate, nitrate, or carbonate including phosphorus.

The amount of cobalt in the cobalt raw material based on 100 mol% of the total metal in the positive electrode active material excluding lithium may be about 0.1 mol% to about 5.0 mol%, for example, about 0.5 mol% to about 4.5 mol%, about 1.0 mol% to about 4.0 mol%, about 1.5 mol% to about 3.5 mol%, or about 2.0 mol% to about 3.0 mol%. When the cobalt content is in these ranges, the positive electrode active material forms a good coating layer without decreasing capacity or increasing resistance, effectively suppressing side reactions with the electrolyte and effectively reducing gas generation under high voltage or high temperature conditions.

The amount of phosphorus in the phosphorus raw material based on 100 mol% of the total metal in the positive electrode active material excluding lithium may be about 0.1 mol% to about 1.0 mol%, for example, about 0.2 mol% to about 0.9 mol%, about 0.3 mol% to about 0.8 mol%, about 0.4 mol% to about 0.7 mol%, or about 0.4 mol% to about 0.6 mol%. If the phosphorus content is in these ranges, the positive electrode active material forms a good coating layer without decreasing capacity or increasing resistance, effectively suppresses side reactions with the electrolyte, and effectively reduces gas generation under high voltage or high temperature conditions.

The third heat treatment may be performed in an oxidizing gas atmosphere. The third heat treatment may be performed at, for example, about 500 °C to about 900 °C, or about 600 °C to about 900 °C, or about 600 °C to about 800 °C. The third heat treatment may be performed for about 5 to about 20 hours, for example, for about 7 to about 20 hours, or for about 10 to about 20 hours.

After the third heat treatment, a disintegration process may be performed. As a result of the disintegration process, particle agglomeration is further eliminated, enabling the manufacture of high-density and long cycle-life rechargeable lithium batteries that include the positive electrode active material. Here, "disintegration" means dispersing and pulverizing relatively weakly cohesive materials such as particle agglomerates or granules. Disintegration is typically performed using equipment such as a cutter mill, roll crusher, or coal mill to remove weak cohesion between secondary particles. For example, the disintegration process may be carried out using a rotary impact crusher, cutter mill, ball mill, or beads mill equipped with a classification device such as a screen.

The positive electrode active material obtained through the preparation method includes particles having a core including a zirconium-containing lithium nickel-based composite oxide and a coating layer disposed on the surface of the core and including cobalt and phosphorus. The positive electrode active material may be in the form of single particles having an average particle diameter (D₅₀) of about 1 µm to about 4 µm, and may include, for example, a mixture of unpulverized secondary particles and pulverized single particles.

### Positive Electrode

In some embodiments, a positive electrode comprising the positive electrode active material described above is provided. The positive electrode includes, for example, a current collector and a positive electrode active material layer on the current collector. The positive electrode active material layer may include the aforementioned positive electrode active material and may further include a binder and/or a conductive material. The positive electrode may also include an additive that can act as a sacrificial positive electrode.

The positive electrode active material may include core particles including a zirconium-containing lithium nickel-based composite oxide and having an amount of nickel greater than or equal to about 60 mol% based on 100 mol% of a total metal in the positive electrode active material excluding lithium, with a coating layer disposed on a surface of each of the core particles and including cobalt and phosphorus. The positive electrode active material may have a BET specific surface area of about 0.7 m²/g to about 0.9 m²/g, and is in a form of single particles.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like. But the present disclosure is not limited to these examples.

The conductive material is used to impart conductivity to the electrode, and any material that does not cause an undesirable chemical change and conducts electrons can be used in the battery. Examples of the conductive material include a carbon-based material such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

The current collector may use an Aluminum thin film, but is not limited thereto.

### Rechargeable Lithium Battery

Embodiments of the present disclosure include a rechargeable lithium battery that includes the aforementioned positive electrode, a negative electrode, and an electrolyte. In an example, a rechargeable lithium battery may include a positive electrode, a negative electrode, a separator between the positive electrode and the negative electrode, and an electrolyte solution.

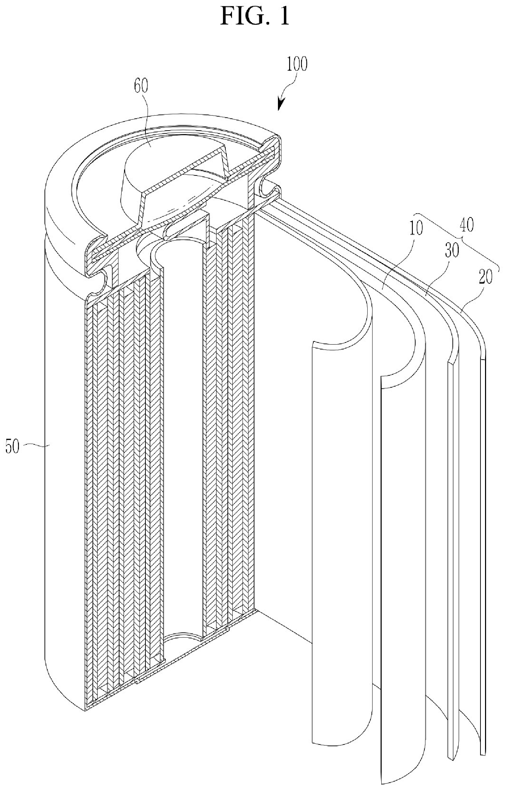

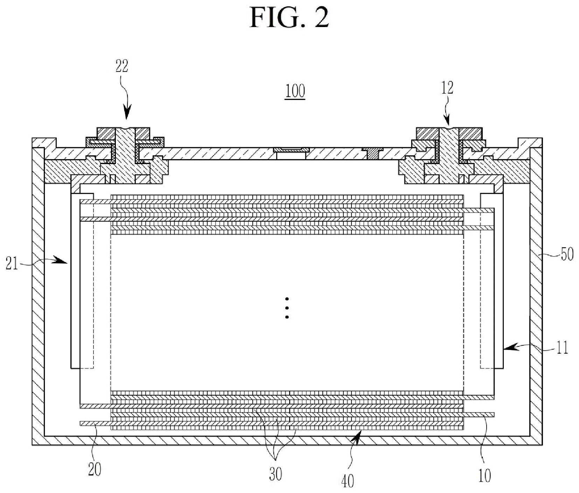

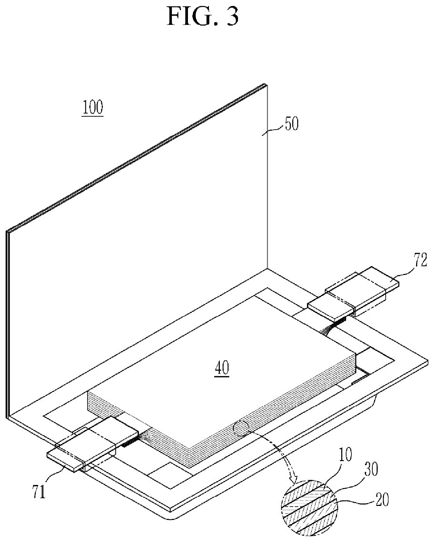

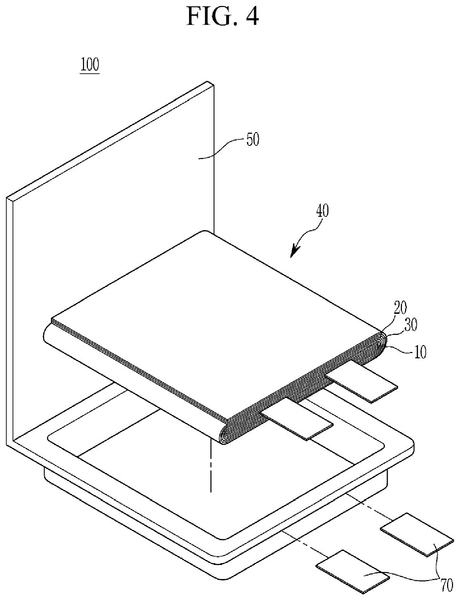

The rechargeable lithium battery may be cylindrical, prismatic, pouch, coin, and the like depending on its shape. FIGS. 1 to 4 are schematic diagrams showing rechargeable lithium batteries according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, as shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40 to outside of the battery.

### Negative Electrode

The negative electrode may include a current collector and a negative electrode active material layer on the current collector, and the negative electrode active material layer may include a negative electrode active material. The negative electrode may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon or a combination thereof. The crystalline carbon may be graphite such as non-shaped, sheet-shaped, flake-shaped, sphere-shaped, or fiber-shaped natural graphite or artificial graphite, and the amorphous carbon may be a soft carbon, a hard carbon, a mesophase pitch carbonization product, calcined coke, and the like.

The lithium metal alloy may include an alloy of lithium and a metal of Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surfaces of the silicon particles. For example, silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, an amount of silicon may be about 10 wt% to about 50 wt% and an amount of the amorphous carbon may be about 50 wt% to about 90 wt% based on 100 wt% of the silicon-carbon composite. In addition, when the composite includes silicon, amorphous carbon, and crystalline carbon, an amount of silicon may be about 10 wt% to about 50 wt%, an amount of the crystalline carbon may be about 10 wt% to about 70 wt%, and an amount of the amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, be in the form of a silicon alloy, or be in an oxidized form. The oxidized form of silicon may be represented by SiOₓ (0<x≤2). The atomic content ratio of Si:O, which indicates a degree of oxidation, may be about 99:1 to about 33:67. As used herein when a definition is not otherwise provided, an average particle diameter (D₅₀) indicates a diameter of a particle where a cumulative volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed, the mixing ratio may be a weight ratio of about 1:99 to about 90:10.

### Binder

The binder serves to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material that does not cause an undesirable chemical change in a battery may be used as a conductive material. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

An amount of the negative electrode active material may be about 95 wt% to about 99.5 wt% based on 100 wt% of the negative electrode active material layer, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, tert-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN, wherein R is a C2 to C20 linear, branched, or cyclic hydrocarbon group, and may include a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance, as is widely known to those of ordinary skill in the art.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be about 0.1 M to about 2.0 M. When the concentration of lithium salt is in this range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, for example, a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one of a polymer polyolefin such as polyethylene and polypropylene, a polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene(such as TEFLON^{®}), or a copolymer or mixture of two or more thereof. The porous substrate may include glass fibers, or may comprise a composite membrane of polymer and glass fibers.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### 1. Preparation of Positive Electrode Active Material

### (1) Preparation of Zirconium-containing Nickel-based Composite Oxide

First, a zirconium-containing nickel-based composite oxide was prepared through the following co-precipitation method.

Nickel sulfate, cobalt sulfate, and manganese sulfate were dissolved in distilled water of a solvent and then mixed with Zr(SO₄)₂·4H₂O of a zirconium raw material to thereby prepare a metal raw material mixture solution. The nickel sulfate, cobalt sulfate, manganese sulfate, and zirconium raw materials were mixed in a molar ratio of Ni:Co:Mn:Zr=94.8:4:1:0.2.

A diluted solution of ammonia water (NH₄OH) as a complexing agent and sodium hydroxide (NaOH) as a pH controlling agent were prepared. A concentration of the ammonia water was 10 wt%, and a concentration of the sodium hydroxide was 20 wt%. The prepared metal raw material mixture solution, diluted ammonia water solution, and sodium hydroxide were each injected into the reactor.

The mixture was stirred for 10 hours by setting pH inside the reactor at 11.75 (first step) and then, stirred for 22 hours by lowering pH to 11.55 (second step) to create a synthesis speed difference between inside and outside the particles. The zirconium-containing nickel-based composite hydroxide was thereby synthesized.

Subsequently, the zirconium-containing nickel-based composite hydroxide was heat-treated at 400 °C under an oxygen atmosphere for 6 hours, thereby forming a zirconium-containing nickel-based composite oxide having an average particle size (D₅₀) of 13.5 µm (hereinafter, referred to as a 'Zr predoped oxide precursor').

### (2) Preparation of Preliminary Positive Electrode Active Material

The prepared zirconium-containing nickel-based composite oxide was mixed with anhydrous lithium hydroxide and then heat-treated at 770 °C for 12 hours under an oxygen atmosphere. The zirconium-containing lithium nickel-based composite oxide made by the heat treatment had a composition of LiNi_{0.948}Co_{0.04}Mn_{0.01}Zr_{0.002}O₂ and was confirmed to be in the form of secondary particles.

Subsequently, the zirconium-containing lithium nickel-based composite oxide was pulverized with a jet mill (processing 5 kg per minute) by setting a bed weight at 300 kg, a rotation speed of a sieving wheel at 1740 rpm, a rotation speed of a blower at 3000 rpm, a pulse pressure at 0.5 bar, and a gap pressure at 0.4 bar, and G/A at 6.3 bar. A preliminary positive electrode active material was thereby obtained in a form of single particles (LiNi_{0.948}Co_{0.04}Mn_{0.01}Zr_{0.002}O₂).

The average particle diameter (D₅₀) of the obtained preliminary positive electrode active material was confirmed to be 2.5 µm, the D₁₀ particle diameter was 1.47 µm, and the D₉₀ particle diameter was 4.87 µm.

Using ICP-OES (Inductively Coupled Plasma - Optical Emission Spectroscopy), it was confirmed that Zr was included at 0.18 wt% based on 100 wt% of the preliminary positive electrode active material.

### (3) Preparation of Positive Electrode Active Material

The prepared preliminary positive electrode active material in the form of single particles, cobalt hydroxide (Co(OH)₂) and monoammonium phosphate (NH₄H₂PO₄) were mixed in a dry manner, heat treated, and disintegrated at 660 °C for 8 hours in an oxygen atmosphere to prepare a positive electrode active material. The disintegration was performed at a speed of 12000 rpm using pin mill equipment. The amount of cobalt in the cobalt hydroxide was designed to be 3.0 mol% based on 100 mol% of the total metal in the positive electrode active material excluding lithium, and the phosphorus content in the monoammonium phosphate was designed to be 0.5 mol% based on 100 mol% of the total metal in the positive electrode active material excluding lithium.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare positive electrode active material layer slurry. The slurry was coated on an aluminum foil current collector and then dried and compressed to make a positive electrode. The prepared positive electrode included the positive electrode active material in the form of pulverized single particles.

A negative electrode active material layer slurry was prepared by mixing 97.5 wt% of graphite negative electrode active material, 1.5 wt% of carboxymethyl cellulose, and 1 wt% of styrene butadiene rubber in a water solvent. The negative electrode active material layer slurry was coated on a copper foil current collector, dried, and pressed to make a negative electrode.

The positive and negative electrodes were used with a polytetrafluoroethylene separator and an electrolyte solution prepared by dissolving 1 M LiPF₆ in a mixed solvent of ethylene carbonate and dimethyl carbonate in a volume ratio of 3:7 to make a rechargeable lithium battery cell according to a common method.

### Example 2

A positive electrode active material and a rechargeable lithium battery cell were made in the same manner as in Example 1, except that, in the preparation of the positive electrode active material, the cobalt content in the cobalt hydroxide was designed to be 2.0 mol% based on 100 mol% of the total metal in the positive electrode active material excluding lithium.

### Comparative Example 1

A positive electrode active material and a rechargeable lithium battery cell were made in the same manner as in Example 1, except that, in the preparation of the positive electrode active material, cobalt hydroxide was not mixed and the amount of phosphorus in the monoammonium phosphate was designed to be 0.1 mol% based on 100 mol% of the total metal in the positive electrode active material excluding lithium.

### Comparative Example 2

A positive electrode active material and a rechargeable lithium battery cell were made in the same manner as in Comparative Example 1, except that, in the preparation of the positive electrode active material, the amount of phosphorus in the monoammonium phosphate was designed to be 0.2 mol% based on 100 mol% of the total metal in the positive electrode active material excluding lithium.

### Comparative Example 3

A positive electrode active material and a rechargeable lithium battery cell were made in the same manner as in Comparative Example 1, except that, in the preparation of the positive electrode active material, the amount of phosphorus in the monoammonium phosphate was designed to be 0.5 mol% based on 100 mol% of the total metal in the positive electrode active material excluding lithium.

### Comparative Example 4

A positive electrode active material and a rechargeable lithium battery cell were made in the same manner as in Comparative Example 1, except that, in the preparation of the positive electrode active material, the amount of phosphorus in the monoammonium phosphate was designed to be 1.0 mol% based on 100 mol% of the total metal in the positive electrode active material excluding lithium.

### Comparative Example 5

A positive electrode active material and a rechargeable lithium battery cell were made in the same manner as in Example 1, except that, in the preparation of the positive electrode active material, monoammonium phosphate was not mixed and the cobalt content in the cobalt hydroxide was designed to be 1.0 mol% based on 100 mol% of the total metal in the positive electrode active material excluding lithium.

### Comparative Example 6

A positive electrode active material and a rechargeable lithium battery cell were made in the same manner as in Comparative Example 5, except that, in the preparation of the positive electrode active material, the cobalt content in the cobalt hydroxide was designed to be 2.0 mol% based on 100 mol% of the total metal in the positive electrode active material excluding lithium.

### Comparative Example 7

A positive electrode active material and a rechargeable lithium battery cell were made in the same manner as in Comparative Example 5, except that, in the preparation of the positive electrode active material, the cobalt content in the cobalt hydroxide was designed to be 3.0 mol% based on 100 mol% of the total metal in the positive electrode active material excluding lithium.

### Comparative Example 8

A positive electrode active material and a rechargeable lithium battery cell were made in the same manner as in Example 1, except that, in the production of a zirconium-containing nickel-based composite oxide, the first and second steps were replaced with stirring for 33 hours at a pH of 10.5 inside the reactor to produce a zirconium-containing nickel-based composite oxide having an average particle diameter (D₅₀) of 3.0 µm.

### Comparative Example 9

The zirconium-containing nickel-based composite hydroxide was prepared according to the positive electrode active material-preparing process of Example 1, and the zirconium-containing nickel-based composite hydroxide (hereinafter, referred to as a 'Zr predoped hydroxide precursor') was mixed with anhydrous lithium hydroxide. Subsequently, the mixture was heat-treated in the same manner as the second heat treatment in Example 1. In addition, the process after the second heat treatment was the same as in Example 1 to make a positive electrode active material and a rechargeable lithium battery cell.

### Comparative Example 10

### 1. Preparation of Positive Electrode Active Material

A nickel-based composite hydroxide was synthesized in the same manner as in Example 1 except that nickel sulfate, cobalt sulfate, and manganese sulfate in a molar ratio of Ni:Co:Mn = 95:4:1 were dissolved in distilled water as a solvent to prepare a metal raw material mixed solution (which was not mixed with Zr(SO₄)₂·4H₂O, a zirconium raw material). Subsequently, the nickel-based composite hydroxide was heat-treated at 400 °C for 6 hours under an oxygen atmosphere to prepare a nickel-based composite oxide.

The prepared nickel-based composite oxide (hereinafter, referred to as a 'Zr undoped oxide precursor') was mixed with anhydrous lithium hydroxide and ZrO₂. The mixture was then heat-treated in the same manner as the second heat treatment of Example 1 to prepare a Zr post-doped oxide precursor.

In addition, the process after the second heat treatment was also performed in the same manner as in Example 1 to make a positive electrode active material and a rechargeable lithium battery cell.

### Evaluation Example 1: Evaluation of Properties of Zr predoped Precursor

The span value, tap density (g/cm³), BET (m²/g), and Zr content (ppm) were measured for the Zr predoped oxide precursor prepared in Example 1, the Zr predoped hydroxide precursor prepared in Comparative Example 9, and the Zr undoped oxide precursor prepared in Comparative Example 10. The results are shown in Table 1.

Specifically, each of the precursors was measured with respect to particle sizes of D₁₀, D₅₀, and D₉₀, which corresponded to 10%, 50%, and 90% cumulative values in its particle size distribution. The measurements were used to derive a span value by calculating a formula of {(D₉₀-D₁₀)/D₅₀} and the results are shown in Table 1.

In addition, each of the precursor powders was tapped according to the ASTM B527 standard and then measured with respect to a powder volume after the tapping. Then, the tap density (g/cm³) was measured by dividing powder mass by the powder volume and the results are shown in Table 1.

Each of the precursors was also measured with respect to BET specific surface areas by using a BET analyzer and the results are shown in Table 1.

In addition, the Zr contents of the Zr predoped oxide precursor prepared in Example 1, the Zr predoped hydroxide precursor prepared in Comparative Example 9, and the Zr undoped oxide precursor prepared in Comparative Example 10 were measured by using ICP-OES (Inductively Coupled Plasma - Optical Emission Spectroscopy) and the results are shown in Table 1.

**Table 1**

| | Span value | Tap density (g/cm³) | BET (m²/g) | Zr content (ppm) |
|---|---|---|---|---|
| Example 1 | 0.43 | 2.08 | 75.90 | 2471 |
| Comparative Example 9 | 1.00 | 2.01 | 7.76 | 1274 |
| Comparative Example 10 | 0.64 | 1.79 | 11.76 | 0 |

Referring to Table 1, the Zr predoped oxide precursor of Example 1 exhibited a lower span value than those of Comparative Examples 9 and 10. Thus, it was confirmed that the Zr predoped oxide precursor of Example 1 had more uniform particle size distribution.

The Zr predoped oxide precursor of Example 1 exhibited higher tap density and thus a smaller volume after the tapping at the same mass as compared to the materials of Comparative Examples 9 and 10. Thus, it was confirmed that the Zr predoped oxide precursor of Example 1 exhibited a higher reaction yield than those of the comparative examples.

The Zr predoped oxide precursor of Example 1 exhibited a superbly higher BET specific surface area as compared to the materials of Comparative Examples 9 and 10. Thus, it can be seen that the uniform precursor particles (or powder) brought about the high specific surface area.

### Evaluation Example 2: Evaluation of Span Value and BET Specific Surface Area (Confirmation of Uniformity)

The positive electrode active materials according to Examples and Comparative Examples were measured with respect to span values. Specifically, each of the positive electrode active materials was measured with respect to D₁₀, D₅₀, and D₉₀ corresponding to 10%, 50%, and 90% cumulative volume of its particle size distribution to calculate {(D₉₀-D₁₀)/D₅₀}, which was obtained as a span value. The results are shown in Table 2 are shown below.

In addition, the BET specific surface area of the positive electrode active materials prepared in the Examples and the Comparative Examples was measured using a BET analyzer, and the results are shown in Table 2. The BET specific surface area was measured by a nitrogen gas adsorption method using a HM model-1208 specific surface area measuring device made by MOUNTECH. Specifically, about 0.3 g of a positive electrode active material was heated in a preprocessor in a nitrogen atmosphere at 300 °C for 1 hour, then further preprocessed at 300 °C for 15 minutes in a surface area measuring device, cooled to the temperature of liquid nitrogen, and saturated with a gas containing 30% of nitrogen and 70% of He. Then, the amount of gas desorbed was measured by heating to room temperature, and the specific surface area was calculated from the obtained results using the conventional BET method.

### Evaluation Example 3: Surface Residual Lithium

The residual lithium content on the surface of the positive electrode active materials prepared in the Examples and the Comparative Examples was measured by the HCl titration method. The results are shown in Table 2 below. Specifically, 10 g of the positive electrode active material was placed in 100 ml of distilled water, stirred at a speed of 300 rpm for 30 minutes, and then the pH change was measured while adding HCl. Because the unreacted residual lithium on the surface of the positive electrode active material existed in the form of Li₂CO₃, LiOH, and the like, titration occurred by reacting CO₃²⁻, OH⁻ ion s, and the like with H of HCl. The amount of HCl solution injected was calculated to calculate the unreacted residual lithium content. In Table 2, Li₂CO₃ and LiOH represent amounts based on 100 wt% of the positive electrode active material, and the unit of total residual lithium (Free Li) is ppm, which represents the content relative to 100 wt% of the positive electrode active material and represents 10⁻⁴ wt%.

**Table 2**

| | Li₂CO₃ (wt%) | LiOH (wt%) | Free Li (ppm) | Span value | BET (m²/g) |
|---|---|---|---|---|---|
| Example 1 | 0.395 | 0.209 | 1348 | 1.22 | 0.89 |
| Example 2 | 0.348 | 0.289 | 1493 | 1.20 | 0.88 |
| Comparative Example 1 | 1.056 | 0.326 | 2929 | 1.35 | 0.95 |
| Comparative Example 2 | 1.037 | 0.321 | 2877 | 1.36 | 0.94 |
| Comparative Example 3 | 0.856 | 0.331 | 2567 | 1.41 | 0.92 |
| Comparative Example 4 | 0.795 | 0.272 | 2281 | 1.40 | 0.91 |
| Comparative Example 5 | 1.013 | 0.291 | 2748 | 1.34 | 0.93 |
| Comparative Example 6 | 0.717 | 0.261 | 2104 | 1.34 | 0.94 |
| Comparative Example 7 | 0.534 | 0.245 | 1714 | 1.32 | 0.96 |

When using a large-particle precursor, a high amount of the surface residual lithium can be a problem. But, based on the total 100 wt% of the lithium nickel-based composite oxide, the amount of the surface residual lithium of the Examples was confirmed to be less than or equal to 1500 ppm, an amount of the LiOH was less than or equal to 0.29 wt%, and an amount of the Li₂CO₃ was less than or equal to 0.4 wt%. Thus, it can be seen that the surface residual lithium was significantly reduced even though the positive electrode active material was prepared using a large-particle precursor.

In addition, it was confirmed that the positive electrode active materials of the Examples exhibited a span value and a BET specific surface area within specific ranges. Thus, it can be seen that the particle size has grown uniformly.

### Evaluation Example 4: Evaluation of Initial Charge/Discharge Efficiency and Cycle-life Characteristics

The initial charge/discharge capacity and efficiency of the rechargeable lithium battery cells made in the Examples and the Comparative Examples were evaluated.

The rechargeable lithium battery cells made in Examples and Comparative Examples were charged at 25 °C with a constant current of 0.2C to an upper limit voltage of 4.3 V and a constant voltage of 0.05 C. Then the rechargeable lithium battery cells made in Examples and Comparative Examples were discharged at 0.2 C to an end voltage of 3.0 V to perform initial charging and discharging. Table 3 shows the efficiency calculated by the ratio of the initial charge capacity, initial discharge capacity, and initial discharge capacity to the initial charge capacity.

Subsequently, the cycle of charging at 1.0 C and discharging at 1.0 C in the voltage range of 3.0 V to 4.3 V at 45 °C was repeated 50 times. The ratio of the discharge capacity after 50 cycles of charge and discharge to the initial discharge capacity was calculated and shown as the cycle-life in Table 3.

**Table 3**

| | Initial charge capacity (mAh/g) | Initial discharge capacity (mAh/g) | Efficiency (%) | Cycle-life (%) |
|---|---|---|---|---|
| Example 1 | 246.6 | 222.4 | 90.2 | 96.5 |
| Example 2 | 246.2 | 221.1 | 89.8 | 96.3 |
| Comparative Example 1 | 248.3 | 217.5 | 87.6 | 93.8 |
| Comparative Example 2 | 248.7 | 217.5 | 87.5 | 94.2 |
| Comparative Example 3 | 249.3 | 217.8 | 87.3 | 93.6 |
| Comparative Example 4 | 249.2 | 216.0 | 86.7 | 94.0 |
| Comparative Example 5 | 247.5 | 218.0 | 88.1 | 95.7 |
| Comparative Example 6 | 247.0 | 218.1 | 88.3 | 96.0 |
| Comparative Example 7 | 247.9 | 219.1 | 88.4 | 96.1 |
| Comparative Example 8 | 246.0 | 215.3 | 87.5 | 92.5 |
| Comparative Example 9 | 251.2 | 218.8 | 87.1 | 91.3 |
| Comparative Example 10 | 246.1 | 213.6 | 86.8 | 94.4 |

Referring to Table 3, it can be seen that the rechargeable lithium battery cells manufactured in the Examples exhibited significantly superior initial discharge capacity, initial charge/discharge efficiency, and cycle-life characteristics compared to the rechargeable lithium battery cells made in the Comparative Examples.

While this disclosure has been described in connection with what is presently considered to be practical example embodiments, it is to be understood that the disclosure is not limited to the disclosed embodiments. Rather, the disclosure includes various modifications and equivalent arrangements.

## Claims

1. A positive electrode active material comprising
core particles each including a zirconium-containing lithium nickel-based composite oxide and each having an amount of nickel greater than or equal to 60 mol% based on 100 mol% of total metal in the zirconium-containing lithium nickel-based composite oxide excluding lithium; and
a coating layer disposed on a surface of each of the core particles and including cobalt and phosphorus,
wherein the positive electrode active material has a BET specific surface area of 0.7 m²/g to 0.9 m²/g, and the positive electrode active material is in a form of single particles.

2. The positive electrode active material as claimed in claim 1, wherein the positive electrode active material has a span value of 1.1 to 1.3 according to the equation: $Span = \left({D}_{90}-{D}_{10}\right) / {D}_{50}$ where D₁₀ is a particle diameter of a particle with a cumulative volume of 10 volume% in a particle size distribution of the positive electrode active material, D₅₀ is a particle diameter of a particle with a cumulative volume of 50 volume% in the particle size distribution, and D₉₀ is a particle diameter of a particle with a cumulative volume of 90 volume% in the particle size distribution.

3. The positive electrode active material as claimed in claim 1 or claim 2, wherein an average particle diameter (D₅₀) of the positive electrode active material is 1 µm to 4 µm.

4. The positive electrode active material as claimed in any one of claims 1 to 3, wherein the zirconium is included in an amount of 0.1 to 0.4 wt% based on 100 wt% of the zirconium-containing lithium nickel-based composite oxide.

5. The positive electrode active material as claimed in any one of claims 1 to 4, wherein the zirconium-containing lithium nickel-based composite oxide is represented:
Liₐ₁Niₓ₁M¹_{y1}Zr_{z1}O_{2-b1}X_{b1}
where 0.9≤a1≤1.2, 0.6≤x1≤0.991, 0≤y1≤0.5, 0.001≤z1≤0.003, 0.9≤x1+y1+z1≤1.1, and 0≤b1≤0.1, M¹ is one or of Al, B, Ba, Ca, Ce, Co, Cr, Cu, Fe, Mg, Mn, Mo, Nb, Si, Sn, Sr, Ti, V, W, Y, and Zn, and X is one or more of F, P, and S.

6. The positive electrode active material as claimed in any one of claims 1 to 5, wherein an amount of cobalt is 0.1 mol% to 5.0 mol% in the coating layer based on 100 mol% of a total metal in the positive electrode active material excluding lithium.

7. The positive electrode active material as claimed in any one of claims 1 to 6, wherein an amount of phosphorus is 0.1 mol% to 1.0 mol% in the coating layer based on 100 mol% of a total metal in the positive electrode active material excluding lithium.

8. A method of preparing a positive electrode active material, the method comprising:
(i) mixing a zirconium raw material and a nickel raw material and performing a co-precipitation reaction to prepare a zirconium-containing nickel-based composite hydroxide;
(ii) performing a first heat treatment on the zirconium-containing nickel-based composite hydroxide to prepare a zirconium-containing nickel-based composite oxide;
(iii) mixing the zirconium-containing nickel-based composite oxide and a lithium raw material and performing a second heat treatment to prepare a zirconium-containing lithium nickel-based composite oxide in the form of secondary particles that are agglomerations of primary particles;
(iv) pulverizing the zirconium-containing lithium nickel-based composite oxide to obtain a preliminary positive electrode active material in a form of single particles; and
(v) mixing the preliminary positive electrode active material, a cobalt raw material, and a phosphorus raw material, performing a third heat treatment, and disintegrating the mixture after the third heat treatment.

9. The method as claimed in claim 8, wherein
(a) the first heat treatment is performed at a temperature of 250 °C to 500 °C, and
wherein the first heat treatment is performed in an oxygen atmosphere or an air atmosphere for 1 to 10 hours,
and/or
(b) the zirconium-containing nickel-based composite oxide is represented by:
Niₓ₁₁M¹¹_{y11}Zr_{z11}O₂
where 0.6≤x11≤1, 0≤y11<0.4, 0<z11≤0.3 and 0.9≤x11+y11+z11≤1.1, and M¹¹ is one or more elements of Al, B, Ba, Ca, Ce, Co, Cr, Cu, Fe, Mg, Mn, Mo, Nb, Si, Sn, Sr, Ti, V, W, Y, and Zn;
and/or
(c) the zirconium-containing nickel-based composite oxide is in a form of particles and has an average particle diameter (D₅₀) of 9 µm to 16 µm.

10. The method as claimed in claim 8 or claim 9, wherein the second heat treatment is performed at a temperature of 600 °C to 900 °C, and
wherein the second heat treatment is performed for 4 to 16 hours.

11. The method as claimed in any one of claims 8 to 10, wherein an alkaline grain growth accelerator is not added during the second heat treatment process of the zirconium-containing nickel-based composite oxide and the lithium raw material.

12. The method as claimed in any one of claims 8 to 11, wherein an average particle diameter (D₅₀) of the secondary particles is 10 µm to 20 µm, and
wherein an average particle diameter (D₅₀) of the primary particles forming the secondary particles is 1 µm to 4 µm.

13. The method as claimed in any one of claims 8 to 12, wherein the pulverizing is performed using a jet mill equipment, and
wherein a rotation speed of a sieving wheel of the jet mill equipment is 1500 rpm to 2000 rpm, a rotation speed of the blower is 2500 rpm to 3500 rpm, and a pulse pressure is 0.25 bar to 0.75 bar.

14. The method as claimed in any one of claims 8 to 13, wherein
(a) an average particle diameter (D₅₀) of the preliminary positive electrode active material in the form of single particles is 1 µm to 4 µm,
and/or
(b) the zirconium is included in an amount of 0.1 wt% to 0.4 wt% based on 100 wt% of the preliminary positive electrode active material in the form of single particles,
and/or
(c) an amount of cobalt in the cobalt raw material is 0.1 mol% to 5.0 mol% based on 100 mol% of the total metal in the positive electrode active material excluding lithium, and
wherein an amount of phosphorus in the phosphorus raw material is 0.1 mol% to 1.0 mol% based on 100 mol% of the total metal in the positive electrode active material excluding lithium,
and/or
(d) the third heat treatment is performed at a temperature of 500 °C to 900 °C, and
wherein the third heat treatment is performed for 5 to 20 hours.

15. A rechargeable lithium battery comprising:
a positive electrode comprising:
a current collector;
a positive electrode active material layer disposed on the current collector and including a positive electrode active material according to any one of claims 1 to 7;
a negative electrode; and
an electrolyte.
